# FASCICULE DE BREVET EUROPEEN

(11) **EP 2 820 790 B1**
(45) Date de publication et mention de la délivrance du brevet: **16.01.2019**
(21) Numéro de dépôt: 13712853.4
(22) Date de dépôt: 27.02.2013
(51) Int. Cl.: G06F 13/42, H04L 5/14, H04L 25/02, H04J 3/14, H02P 29/00

(54) **PROCEDE DE COMMUNICATION PERIODIQUE ENTRE AU MOINS UN PREMIER SYSTEME ET AU MOINS UN DEUXIEME SYSTEME PAR L'INTERMEDIAIRE D'UNE LIAISON SERIE SYNCHRONE FULL DUPLEX**
PERIODISCHES KOMMUNIKATIONSVERFAHREN ZWISCHEN MINDESTENS EINEM ERSTEN UND MINDESTENS EINEM ZWEITEN SYSTEM MITTELS EINER SYNCHRONEN SERIELLEN VOLLDUPLEX-VERKNÜPFUNG
PERIODIC COMMUNICATION METHOD BETWEEN AT LEAST ONE FIRST SYSTEM AND AT LEAST ONE SECOND SYSTEM BY MEANS OF A FULL-DUPLEX SYNCHRONOUS SERIAL LINK

(30) Priorité: 28.02.2012 FR 1251794
(43) Date de publication de la demande: 07.01.2015
(73) Titulaire: Valeo Systèmes de Contrôle Moteur, 95800 Cergy (FR)
(72) Inventeur: BECQUET, Valéry, F-80540 Molliens-Dreuil (FR); GAROT, Olivier, F-95490 Vaureal (FR)
(74) Mandataire: Argyma
(86) Numéro de dépôt international: PCT/FR2013/050393
(87) Numéro de publication internationale: WO 2013/128112

(56) Documents cités:
- EP-A1- 1 174 799
- EP-A2- 1 011 240
- EP-A2- 1 553 731

## Description

La présente invention concerne un procédé de communication périodique entre au moins un premier système et au moins un deuxième système par l'intermédiaire d'une liaison série synchrone full duplex.

Au sens de la présente invention, une liaison full duplex est une liaison permettant un échange de données bidirectionnel et de façon simultanée.

Les documents EP 1174799A1 et EP 1011240A2 décrivent des procédés de communication en full-duplex entre deux systèmes.

Par ailleurs, le document EP 1553731A2 décrit un procédé de communication selon le préambule de la revendication 1. L'invention s'applique notamment, mais non exclusivement, à la communication entre des systèmes impliqués dans la commande d'interrupteurs électroniques tels que des transistors.

Le premier et le deuxième système sont par exemple embarqués sur un véhicule automobile hybride ou électrique et peuvent être impliqués dans la commande des interrupteurs électroniques d'un onduleur interposé entre la batterie et le moteur électrique du véhicule alimenté par cette batterie. L'onduleur peut également, ou en variante, faire partie d'un circuit onduleur/chargeur apte à être branché sur le réseau électrique pour charger la batterie, notamment à travers les bobines du stator du moteur électrique.

L'invention vise à permettre une communication périodique à distance entre un premier et un deuxième système, respectant tout ou partie des contraintes suivantes :
- garantir une isolation de tension entre le premier système et le deuxième système,
- limiter autant que possible le nombre de fils électriques formant la liaison entre le premier système et le deuxième système,
- garantir que, lorsque le premier système doit travailler dans un temps imparti, l'envoi de données du premier système au deuxième système, leur traitement par le deuxième système et le renvoi des données ainsi traitées au premier système se fasse pendant une durée compatible avec ce temps imparti,
- garantir que la liaison soit suffisamment répandue pour ne pas restreindre le choix des composants, tels que des microcontrôleurs ou des circuits logiques programmables,
- utilisés pour mettre en oeuvre via la liaison la communication entre le premier et le deuxième système, obtenir une liaison permettant d'échanger un grand nombre de données avec des niveaux de priorité différents,
- réduire les risques qu'en raison de gigue (*jitter* en anglais) les données acheminées par la liaison n'arrivent pas en temps utile au système en ayant besoin pour les traiter.

Selon l'un de ses aspects, l'invention a pour objet un procédé de communication périodique entre au moins un premier système et au moins un deuxième système par l'intermédiaire d'une liaison série synchrone full duplex, procédé dans lequel, lors d'une période de communication, sont échangées entre le premier système et le deuxième système des données comprenant : au moins un message du premier système au deuxième système, au moins un message du deuxième système au premier système et un signal d'horloge, le signal d'horloge étant acheminé par la liaison pendant un intervalle temporel dont l'amplitude est inférieure à la période de communication, le message du premier système au deuxième système et le message du deuxième système au premier système étant tous deux acheminés par la liaison pendant cet intervalle temporel.

L'emploi d'une liaison série synchrone full duplex permet de réduire le nombre de fils de la liaison et de transmettre des données ayant des niveaux de priorité différents.

En outre, selon le procédé ci-dessus, l'acheminement de message(s) du premier système au deuxième système est synchronisé avec l'acheminement de message(s) du deuxième système au premier système, ce qui permet de s'assurer que chaque système dispose de suffisamment de temps pour traiter les données reçues via ces messages malgré la gigue.

Les messages échangés entre le premier système et le deuxième système peuvent être synchronisés avec le signal d'horloge.

La liaison peut être de type Serial Peripheral Interface (SPI). « SPI » correspond au protocole du même nom développé par la société MOTOROLA^{R}. Une liaison de type SPI est suffisamment répandue pour ne pas être trop contraignante en ce qui concerne le choix de microcontrôleurs ou de FPGA dans le premier ou deuxième système.

Le premier système peut être un système maître, c'est-à-dire que c'est lui qui a l'initiative du déclenchement de la communication avec le deuxième système, ce deuxième système étant alors esclave.

Lorsque le premier système est un système maître, ce dernier peut générer le signal d'horloge. En variante, le signal d'horloge peut être généré par le deuxième système qui est esclave.

Une isolation, notamment galvanique, peut être interposée entre le premier système et le deuxième système et cette isolation est alors traversée par la liaison. Cette isolation permet l'existence une isolation de tension lorsque le premier système et le deuxième système sont dans des environnements de tension différents. Le premier système est par exemple un système « basse tension » (BT selon la norme IEC 60038, c'est-à-dire avec une tension continue comprise entre 120 et 1500 V ou une tension alternative comprise entre 50 et 1000 V) tandis que le deuxième système est par exemple un système « très basse tension » (TBT selon la norme IEC 60038, c'est-à-dire avec une tension continue inférieure à 120 V ou une tension alternative inférieure à 50 V).

L'isolation, notamment galvanique, est par exemple multicanaux, et chaque fil de la liaison est reçu dans un des canaux de l'isolation.

L'invention n'est cependant pas limitée à une liaison traversant une isolation, pouvant également être mise en oeuvre avec une liaison ne traversant pas d'isolation.

La liaison peut avoir un débit supérieur ou égal à 5 Mbits/s, notamment supérieur à 10 Mbits/s, étant notamment de l'ordre de 20 Mbits/s. Un tel débit permet de s'assurer que le temps total nécessité par l'envoi de données du premier système au deuxième système, par leur traitement par le deuxième système et par la réception de ces données traitées par le premier système est inférieur au temps imparti au premier système pour travailler. Le premier système interagit par exemple avec des interrupteurs électroniques, auquel cas la fréquence de commutation de ces interrupteurs électroniques définit le temps imparti au premier système. Cette fréquence de commutation est par exemple de l'ordre de 20 kHz.

Chacun du premier système et du deuxième système peut comprendre un module full duplex chargé de la communication avec l'autre système.

En variante, l'un du premier système et du deuxième système peut comprendre un premier module half duplex chargé de l'émission de données sur la liaison et un deuxième module half duplex chargé de la réception des données acheminées par la liaison.

L'un du premier système et du deuxième système peut comprendre au moins un circuit logique programmable (FPGA) et l'autre du premier système et du deuxième système peut comprendre au moins un microcontrôleur ou au moins un microprocesseur.

L'un du premier système et du deuxième système peut interagir avec un générateur de valeurs de rapport cyclique et l'autre du premier système et du deuxième système peut interagir avec un circuit électrique comprenant un onduleur et un moteur électrique. L'onduleur peut comprendre des interrupteurs électroniques, par exemple des transistors pouvant être des transistors bipolaires, à effet de champ ou de type IGBT.

Lorsqu'il est maître, le premier système peut comprendre un circuit logique programmable. Dans ce cas, le deuxième système est esclave et il peut comprendre un microcontrôleur ou microprocesseur.

Lorsqu'il est esclave, le premier système peut comprendre un microcontrôleur ou un microprocesseur et le deuxième système est alors maître et peut comprendre un circuit logique programmable.

Les données acheminées par la liaison et autres que le signal d'horloge peuvent être constituées par des valeurs de rapport cyclique pour des interrupteurs électroniques et des valeurs de courant mesurées dans au moins une phase d'un stator d'un moteur électrique.

En variante, la liaison peut acheminer des données autres en plus des signaux d'horloge, des valeurs de rapport cyclique pour interrupteurs électroniques et des valeurs de courant mesurées.

Selon cette variante, chaque message envoyé par le premier système peut d'abord comprendre des données secondaires puis des données primaires, les données primaires étant notamment les valeurs de courant mesurées dans au moins une phase d'un stator de moteur électrique. Les données secondaires peuvent avoir un niveau de priorité inférieur au niveau de priorité des données primaires.

Lorsque le premier système interagit avec le circuit électrique comprenant l'onduleur et le moteur électrique, les données primaires envoyées par le premier système peuvent être des valeurs de courant mesurées dans une ou plusieurs phases du stator. Les données secondaires peuvent être un drapeau (flag) d'erreur envoyé au deuxième système, un mode de fonctionnement du premier système, des valeurs de température ou un identifiant de multiplexage, par exemple.

Toujours selon cette variante, chaque message envoyé par le deuxième système au premier système peut d'abord comprendre des données primaires, notamment les valeurs de rapports cycliques à appliquer à des interrupteurs électroniques d'un onduleur, puis des données secondaires.

Lorsque le deuxième système interagit avec le générateur de rapport cyclique, les données primaires envoyées par le deuxième système peuvent être des valeurs de rapports cycliques à appliquer aux interrupteurs électroniques de l'onduleur avec lequel interagit le premier système. Les données secondaires envoyées par le deuxième système peuvent être une demande de réinitialisation résultant d'un drapeau d'erreur précédemment reçu, des calibrations liées au mode de fonctionnement demandé pour le premier système, un identifiant de multiplexage, ou encore des valeurs limites de rapport cyclique, par exemple.

La liaison peut ne pas acheminer simultanément les données primaires envoyées par le premier système au deuxième système et les données primaires envoyées par le deuxième système au premier système.

La liaison peut ou non acheminer simultanément des données secondaires envoyées par le premier système au deuxième système et des données secondaires envoyées par le deuxième système au premier système.

Lorsque le premier système interagit avec un circuit électrique comprenant un onduleur et un moteur électrique et lorsque le deuxième système interagit avec un générateur de valeurs de rapport cyclique, au moins une période de communication peut comporter les étapes suivantes :
- (i) mesure de valeurs de courant dans au moins une phase du stator du moteur électrique, cette mesure ayant notamment lieu à l'initiative du premier système,
- (ii) acheminement par la liaison au deuxième système de ces valeurs sous la forme des données primaires envoyées par le premier système,
- (iii) traitement par le deuxième système des valeurs reçues et élaboration de valeurs de rapport cyclique pour les interrupteurs électroniques de l'onduleur,
- (iv) acheminement par la liaison au premier système de ces valeurs de rapport cyclique sous la forme des données primaires envoyées par le deuxième système, et
- (v) traitement par le premier système de ces valeurs reçues et application de ces valeurs de rapport cyclique par les interrupteurs de l'onduleur.

L'étape (iii) de traitement par le deuxième système des valeurs reçues et d'élaboration de valeurs de rapport cyclique pour les interrupteurs de l'onduleur peut avoir une durée inférieure ou égale à la durée correspondant à la différence entre la période de communication et l'amplitude de l'intervalle temporel d'acheminement du signal d'horloge.

Lorsque le signal d'horloge est généré par l'un du premier et du deuxième système, ce signal d'horloge reçu par l'autre du premier et du deuxième système peut être renvoyé simultanément à sa réception au système l'ayant généré, de manière à éviter que le retard induit par l'acheminement des données par la liaison n'empêche le premier système et le deuxième système d'échantillonner les messages qu'ils reçoivent de façon synchrone avec le signal d'horloge, conformément à ce qui est décrit dans la demande déposée en France par la Déposante le 19 décembre 2011 sous le n° 11 61961.

L'invention a encore pour objet, selon un autre de ses aspects, un ensemble configuré pour permettre la mise en oeuvre du procédé ci-dessus.

L'invention a encore pour objet, selon un autre de ses aspects, un procédé de communication périodique entre au moins un premier système et au moins un deuxième système par l'intermédiaire d'une liaison série synchrone full duplex, procédé dans lequel, lors d'une période de communication, sont échangées entre le premier système et le deuxième système des données comprenant :
- au moins un message du premier système au deuxième système,
- au moins un message du deuxième système au premier système, et
- un signal d'horloge,
le signal d'horloge étant acheminé par la liaison pendant un intervalle temporel dont l'amplitude est inférieure à la période de communication, le message du premier système au deuxième système et le message du deuxième système au premier système étant tous deux acheminés par la liaison pendant ledit intervalle temporel, et une période de communication comprenant les étapes suivantes :
- (i) mesure de valeurs d'au moins une grandeur électrique ou mécanique au sein d'un dispositif interagissant avec le premier système,
- (ii) acheminement par la liaison au deuxième système de ces valeurs envoyées par le premier système,
- (iii) traitement par le deuxième système des valeurs reçues et élaboration de valeurs résultantes,
- (iv) acheminement par la liaison au premier système de ces valeurs résultantes envoyées par le deuxième système, et
- (v) traitement par le premier système de ces valeurs résultantes et application de ces valeurs résultantes dans le dispositif.

Les valeurs résultantes peuvent être déterminées de manière à réguler la ou lesdites grandeurs mécaniques ou électriques et être alors appliquées lors de l'étape (v) au dispositif dans ce but.

Il s'agit par exemple d'une tension, d'un courant, d'une vitesse. En variante, il pourrait s'agir d'une grandeur thermique, telle qu'une température.

L'étape (iii) de traitement par le deuxième système des valeurs reçues et d'élaboration de valeurs résultantes peut avoir une durée inférieure ou égale à la durée correspondant à la différence entre la période de communication et l'amplitude de l'intervalle temporel d'acheminement du signal d'horloge.

Chaque message envoyé par le premier système peut d'abord comprendre des données secondaires puis des données primaires, et chaque message envoyé par le deuxième système peut d'abord comprendre des données primaires puis des données secondaires.

La liaison peut ne pas acheminer simultanément les données primaires envoyées par le premier système au deuxième système et les données primaires envoyées par le deuxième système au premier système.

Lors de l'étape (ii), les valeurs envoyées par le premier système peuvent être acheminées sous la forme des données primaires, et lors de l'étape (iv), les valeurs résultantes envoyées par le deuxième système peuvent être acheminées sous la forme des données primaires.

Le dispositif peut comporter des interrupteurs électroniques, et les valeurs résultantes peuvent être des valeurs de rapport cyclique pour ces interrupteurs.

Par « interrupteurs électroniques », on désigne notamment des transistors, par exemple à effet de champ, bipolaire ou de type IGBT.

Le dispositif est par exemple un circuit électrique comprenant un convertisseur statique et un enroulement électrique d'un moteur électrique.

Le convertisseur statique est par exemple un convertisseur de tension continu/continu ou un convertisseur de tension continu/alternatif, encore appelé « onduleur ».

L'enroulement électrique du moteur est par exemple un enroulement statorique ou un enroulement rotorique. Il peut s'agir aussi bien d'un moteur à courant continu que d'un moteur à courant alternatif ou que d'un moteur à reluctance variable.

La période de communication peut comprendre les étapes suivantes :
- (i) mesure de valeurs de courant dans l'enroulement électrique du moteur électrique,
- (ii) acheminement par la liaison au deuxième système de ces valeurs sous la forme des données primaires envoyées par le premier système,
- (iii) traitement par le deuxième système des valeurs reçues et élaboration de valeurs de rapport cyclique pour les interrupteurs électroniques du convertisseur statique,
- (iv) acheminement par la liaison au premier système de ces valeurs de rapport cyclique sous la forme des données primaires envoyées par le deuxième système, et
- (v) traitement par le premier système de ces valeurs reçues et application de ces valeurs aux interrupteurs électroniques du convertisseur statique.

L'enroulement électrique peut être statorique et/ou polyphasé, et lors de l'étape (i) on peut mesurer des valeurs de courant dans au moins une phase de cet enroulement électrique.

Le deuxième système peut interagir avec un générateur de valeurs de rapport cyclique.

La liaison peut être une liaison de type Serial Peripheral Interface (SPI).

Le premier système peut être maître de la communication, « maître » ayant la même signification que celle ci-dessus.

Une isolation peut être interposée entre le premier système et le deuxième système, et cette isolation peut être traversée par la liaison.

La liaison a par exemple un débit supérieur ou égal à 5 Mbits/s, notamment supérieur à 10 Mbits/s, étant notamment de l'ordre de 20 Mbits/s.

L'un du premier système et du deuxième système comprend par exemple au moins un circuit logique programmable et l'autre du premier système et du deuxième système comprend au moins un microcontrôleur ou au moins un microprocesseur.

De préférence, le premier système comprend au moins un circuit logique programmable et le deuxième système comprend au moins un microprocesseur.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique la couche physique selon le modèle OSI d'un ensemble au sein duquel le procédé selon l'invention peut être mis en oeuvre, et
- la figure 2 est un chronogramme illustrant une séquence de communication lorsque le procédé est mis en oeuvre dans l'ensemble de la figure 1.

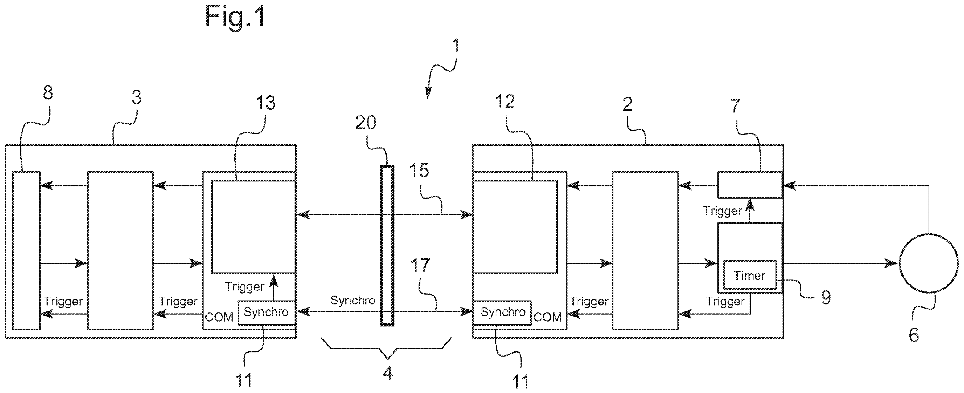

On a représenté à la figure 1 la couche 1 selon le modèle OSI d'un ensemble 1 au sein duquel le procédé selon l'invention peut être mis en oeuvre.

L'ensemble 1 comprend dans l'exemple de la figure 1 un premier système 2 et un deuxième système 3 échangeant des données par l'intermédiaire d'une liaison série synchrone full duplex 4.

Dans l'exemple considéré, l'ensemble 1 est embarqué sur un véhicule qui comprend un circuit électrique comportant un moteur électrique 6, une batterie et un onduleur interposé entre la batterie et le moteur électrique. Le circuit électrique peut comprendre un connecteur permettant de charger la batterie par l'intermédiaire d'un réseau électrique, notamment à travers les bobines du stator du moteur électrique 6.

L'ensemble 1 fait dans l'exemple considéré partie d'un dispositif de commande des interrupteurs électroniques de l'onduleur. Ces interrupteurs ont par exemple une fréquence de commutation de l'ordre de quelques dizaines de kHz, par exemple de 20 kHz. Il s'agit par exemple de transistors bipolaires, à effet de champ ou de type IGBT.

Le premier système 2 est par exemple un périphérique interagissant avec l'onduleur pour commander ses interrupteurs électroniques et avec le moteur électrique 6 pour mesurer le courant circulant dans chaque phase du stator du moteur 6, ce dernier étant notamment polyphasé, par exemple triphasé.

Le premier système 2 envoie par exemple des valeurs de rapport cyclique aux interrupteurs électroniques de l'onduleur et reçoit, après passage par un convertisseur analogique/numérique 7, des valeurs des courants mesurées dans les phases du stator du moteur 6.

Le deuxième système 3 intègre dans l'exemple considéré un générateur 8 de valeurs de rapport cyclique en fonction de valeurs de courant. Ce générateur 8 met par exemple en oeuvre un traitement logiciel. En variante, le générateur 8 est externe au deuxième système 3.

Le premier système 2 est maître dans l'exemple de la figure 1, c'est-à-dire que la communication entre le premier système 2 et le deuxième système 3 est déclenchée à l'initiative du premier système 2. Ce dernier comprend par exemple un module de déclenchement 9 (trigger en anglais) à l'initiative de ce déclenchement.

Toujours dans l'exemple de la figure 1, le signal d'horloge est généré par le deuxième système 3 qui est esclave. Des modules 11 de synchronisation sont intégrés au premier système 2 et au deuxième système 3 pour permettre le cadencement de la communication par le premier système 1. Dans une variante non représentée, le signal d'horloge peut être généré par le premier système 2.

Dans l'exemple considéré, le premier système 2 utilise un circuit logique programmable (FPGA). Le premier système 2 comprend dans cet exemple un module full duplex 12 responsable de l'envoi et de la réception de données sur la liaison 4. Le deuxième système 3 comprend également dans cet exemple un module full duplex 13.

La liaison 4 peut être de type SPI, auquel cas chaque module 12, 13 est un contrôleur SPI full duplex.

Dans une variante non représentée, l'un du premier système 2 et du deuxième système 3 peut comprendre deux modules half duplex, l'un de ces deux modules half duplex étant responsable de l'envoi par ledit système 2 ou 3 de données sur la liaison 4 tandis que l'autre de ces deux modules est responsable de la réception de données acheminées audit 2 ou 3 système par la liaison 4.

La liaison 4 permet dans l'exemple considéré l'envoi par le premier système 2 de données primaires étant des valeurs de courant au deuxième système 3 et de données secondaires qui peuvent être un drapeau (flag) d'erreur envoyé au deuxième système 3, un mode de fonctionnement du premier système 2, des valeurs de température ou un identifiant de multiplexage.

Toujours dans cet exemple, la liaison 4 permet l'envoi par le deuxième système 3 de données primaires étant des valeurs de rapport cyclique générées sur la base des valeurs de courant par le générateur 8 et de données secondaires qui peuvent être une demande de réinitialisation résultant d'un drapeau d'erreur précédemment reçu, des calibrations liées au mode de fonctionnement demandé pour le premier système 2, un identifiant de multiplexage, ou encore des valeurs limites de rapport cyclique, par exemple.

La liaison 4 comprend dans l'exemple de la figure 1 un faisceau de fils 15 permettant d'échanger les messages entre le premier système 2 et le deuxième système 3 ainsi que le signal d'horloge.

Comme divulgué dans la demande déposée en France par la Déposante le 19 décembre 2011 sous le n° 11 61961, le faisceau 15 peut être constitué par quatre fils, à savoir un premier fil responsable de l'acheminement des messages du premier système 2 au deuxième système 3, un deuxième fil responsable de l'acheminement des messages du deuxième système 3 au premier système 2, un troisième fil responsable de l'acheminement du signal d'horloge généré dans l'exemple décrit par le deuxième système 3 et un quatrième fil reliant une zone du troisième fil et le deuxième système. Ladite zone du troisième fil où prend naissance le quatrième fil peut être positionnée de manière à ce que le signal d'horloge renvoyé par le quatrième fil au deuxième système 3 soit, au niveau de ladite zone, sensiblement identique au signal d'horloge reçu par le premier système 2.

La liaison 4 comprend encore dans l'exemple de la figure 1 un fil 17 reliant entre eux les modules de synchronisation 11 et permettant le cadencement de la communication par le premier système 2, bien que ce dernier ne génère pas le signal d'horloge.

Dans l'exemple de la figure 1, le premier système 2 est galvaniquement isolé par rapport au deuxième système 3. Cette isolation galvanique 20 est ici réalisée par l'intermédiaire d'un transformateur mais l'invention n'est pas limitée à une réalisation particulière de l'isolation galvanique. L'isolation galvanique 20 est dans cet exemple une isolation multicanaux, chaque fil du faisceau 15 étant reçu dans un canal propre de l'isolation 20. Le fil 17 de la liaison 4 peut être reçu dans un autre canal de l'isolation 20.

Le cas échéant, l'isolation 20 peut être monobloc ou être formée par la réunion de deux isolateurs distincts, l'un des isolateurs étant par exemple traversé par le faisceau 15 tandis que l'autre isolateur est traversé par le fil 17.

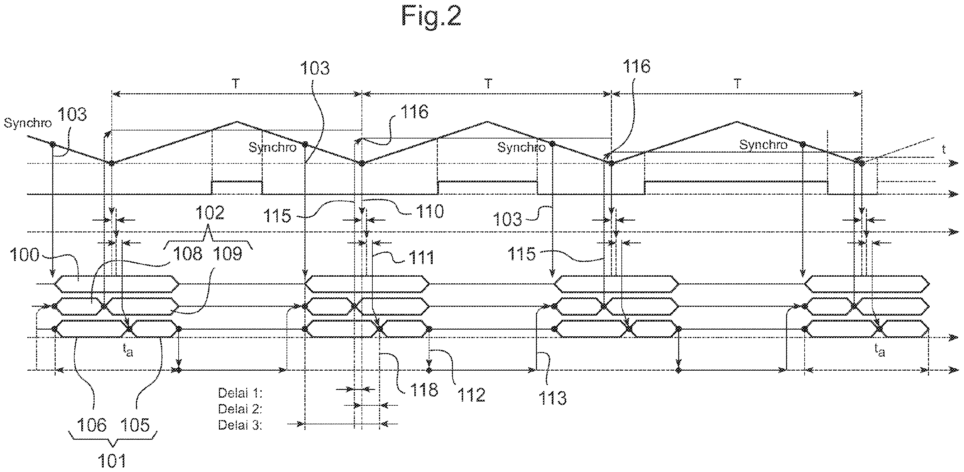

On va maintenant décrire en référence à la figure 2 un chronogramme illustrant un exemple de séquence de communication au sein de la couche réseau représentée à la figure 1 de l'ensemble 1.

Comme on peut le voir, la communication établie à l'aide de la liaison 4 s'effectue dans l'exemple selon une période de communication T, cette dernière étant notamment comprise entre 25 µs et 500 µs, notamment entre 25 µs et 250 µs, étant par exemple de l'ordre de 100 µs..

Pendant chaque période, un signal d'horloge 100 est envoyé par le deuxième système 3 au premier système 2. Ce signal d'horloge 100 est envoyé pendant un intervalle temporel dont l'amplitude tₐ est inférieure à la période T.

Comme on peut le voir sur la figure 2, pendant l'intervalle temporel d'acheminement du signal d'horloge 100, un message 101 est envoyé par le premier système 2 au deuxième système 3 et un message 102 est envoyé par le deuxième système 3 au premier système 2. Comme on peut le voir sur la figure 2, le message 101 et le message 102 sont envoyés simultanément avec le message 100. Cet envoi simultané est par exemple déclenché par un message de synchronisation 103 généré par le module de déclenchement 9. La totalité du message 101 et la totalité du message 102 sont dans l'exemple considéré acheminées pendant tout l'intervalle temporel d'acheminement du signal d'horloge 100.

Ainsi, une période de communication peut être découpée en une première partie pendant laquelle la liaison achemine simultanément le signal d'horloge 100 et les messages 101 et 102 et une deuxième partie pendant laquelle aucune donnée n'est acheminée par la liaison 4, cette deuxième partie étant encore appelée durée inter-trames.

Comme représenté sur la figure 2, le message 101 envoyé par le premier système 2 comprend les données primaires 105 et les données secondaires 106 mentionnées en référence à la figure 1. Dans l'exemple considéré, les données secondaires 106 sont émises avant les données primaires 105.

Toujours dans l'exemple de la figure 2, le message 102 envoyé par le deuxième système 3 comprend les données primaires 108 et les données secondaires 109 mentionnées en référence à la figure 1. Dans l'exemple considéré, les données primaires 108 sont émises avant les données secondaires 109.

Les données primaires 105 et 108 se présentent par exemple chacune sous la forme d'un bloc atomique ayant un niveau de priorité supérieur à celui des blocs atomiques formant les données secondaires 106 et 109.

Chaque bloc formant les données primaires 105 et 108 peut se terminer par des données de contrôle de redondance, permettant de s'assurer que l'intégralité des données primaires est bien reçu après acheminement par la liaison 4. Le bloc formant les données secondaires 109 peut également se terminer par des données de contrôle de redondance, permettant de s'assurer que l'intégralité de ces données secondaires est bien reçue après acheminement par la liaison 4. Le cas échéant, le bloc formant les données secondaires 106 peut également se terminer par des données de contrôle de redondance.

Comme on peut le voir sur la figure 2, les données primaires 105 et 108 peuvent ne pas être acheminées en même temps par la liaison 4, les données primaires 105 étant acheminées alors que des données secondaires 109 sont acheminées et les données primaires 108 étant acheminées alors que des données secondaires 106 le sont. En revanche, une partie des données secondaires 106 peut être acheminée par la liaison 4 en même temps qu'une partie des données secondaires 109.

Par ailleurs, comme on peut le voir sur la figure 2, chaque message 101 envoyé par le premier système 2 au deuxième système 3 peut comprendre davantage de données secondaires 106 que de données primaires 105. Similairement, chaque message 102 envoyé par le premier système 2 au deuxième système 3 peut comprendre davantage de données secondaires 109 que de données primaires 108.

On va maintenant décrire plusieurs étapes effectuées lors d'une période N de communication entre le premier 2 et le deuxième 3 système lorsque l'on cherche à calculer des valeurs de rapport cyclique pour les interrupteurs électroniques de l'onduleur.

Lors d'une première étape, une acquisition analogique des courants circulant dans les phases du stator du moteur électrique 6 est effectuée à l'initiative du premier système 2. Cette étape est initiée sur un ordre 110 donné par le module de déclenchement 9 et a lieu au tout début de la période N. Pendant cette étape, le signal d'horloge 100 et les messages 101 et 102 sont acheminés par la liaison 4, suite à l'émission à la fin de la période précédente N-1 d'un message de synchronisation 103. A ce stade, le message 101 est formé par les données secondaires 106 tandis que le message 102 est formé par les données secondaires 109. Ces valeurs analogiques de courant sont numérisées par le convertisseur 7, mises en forme 111 par le module full duplex 12 du premier système 2 puis acheminées 118 lors d'une deuxième étape sous la forme de données primaires 105 par la liaison 4 au deuxième système 3.

Ces données primaires 105 sont reçues 112 par le module full duplex 13 du deuxième système 3 et envoyées au générateur de valeurs de rapport cyclique 8. Ce générateur 8, sur la base des données issues des valeurs analogiques de courants précédemment obtenues, détermine les valeurs de rapport cyclique à appliquer à chaque interrupteur électronique de l'onduleur lors de la période suivante N+1. A l'issue de cette étape, les valeurs de rapport cyclique ainsi déterminées sont transmises 113 au module full duplex 13 du deuxième système 3.

Les valeurs de rapport cyclique sont alors acheminées sous la forme de données primaires 108 au premier système 2 par la liaison 4 à la réception du message de synchronisation 103.

Ces données 108 sont reçues 115 par le module full duplex 12 du premier système 2, puis le premier système 2 commande les interrupteurs électroniques de l'onduleur en leur appliquant 116 au début de la période suivante N+1 les valeurs de rapport cycliques calculées sur la base des courants circulant dans les phases du moteur 6 lors de la période N.

A l'examen de la figure 2, on peut constater que l'exemple de procédé décrit permet l'application dès la période N+1 de valeurs de rapport cyclique calculées sur la base des courants mesurés lors de la période N malgré l'aller/retour via la liaison 4 et le temps de traitement par le premier système 2 et le deuxième système 3.

Pour ce faire, il faut calibrer:
- un premier délai entre la réception 115 par le module full duplex 12 des valeurs de rapport cyclique à appliquer lors de la période suivante N+1 et l'application 116 de ces valeurs de rapport cyclique au tout début de ladite période N+1,
- un deuxième délai entre la réception du message 110 d'acquisition des valeurs au tout début de chaque période et le début 118 de l'acheminement des valeurs de courant ainsi acquises par la liaison 4, et
- un troisième délai regroupant l'acheminement des valeurs de rapport cycliques par la liaison 4 sous la forme des données primaires 108, le premier délai ci-dessus et le deuxième délai ci-dessus. Ce troisième délai peut correspondre à la durée pendant laquelle les données secondaires 106 sont acheminées du premier système 2 vers le deuxième système 3.

Dans l'exemple décrit, chaque système 2 ou 3 comprend un module full duplex 12 ou 13 mais dans des exemples non représentés, le premier système 2 et/ou le deuxième système 3 peut comprendre un module half duplex chargé de l'émission de données sur la liaison 4 et un module half duplex chargé de la réception de données acheminées par la liaison 4.

Le procédé qui vient d'être décrit peut permettre d'obtenir tout ou partie des avantages suivants :
- être transparent vis-à-vis du générateur de valeurs de rapport cyclique,
- utiliser une liaison isolée avec un nombre réduit de fils
- effectuer des acquisitions de courant analogiques et disposer d'une grande flexibilité quant au choix du nombre d'interrupteurs électroniques à commander par PWM,
- rendre le système maître autonome en cas de défaillance,
- envoyer des données complémentaires permettant d'avoir des informations sur l'état des systèmes, les erreurs éventuelles, la température...
- contrôler l'intégrité des données reçues,
- échanger des données via la liaison sans avoir recours au processeur (CPU) lorsque chacun du premier système et du deuxième système utilise un microcontrôleur.

L'invention n'est pas limitée aux exemples qui viennent d'être décrits.

L'expression « comportant un » doit être comprise comme étant synonyme de l'expression « comportant au moins un », sauf lorsque le contraire est spécifié.

## Revendications

1. Procédé de communication périodique entre au moins un premier système (2) et au moins un deuxième système (3) par l'intermédiaire d'une liaison (4) série synchrone full duplex, procédé dans lequel, lors d'une période de communication (T), sont échangées entre le premier système (2) et le deuxième système (3) des données comprenant :
- au moins un message (101) du premier système (2) au deuxième système (3),
- au moins un message (102) du deuxième système (3) au premier système (2) et un signal d'horloge (100),
le signal d'horloge (100) étant acheminé par la liaison (4) pendant un intervalle temporel dont l'amplitude (tₐ) est inférieure à la période de communication (T), le message (101) du premier système (2) au deuxième système (3) et le message (102) du deuxième système (3) au premier système (2) étant tous deux acheminés par la liaison (4) pendant ledit intervalle temporel, et une période de communication (T) comprenant les étapes suivantes :
- (i) mesure de valeurs d'au moins une grandeur électrique ou mécanique au sein d'un dispositif interagissant avec le premier système (2),
- (ii) acheminement par la liaison (4) au deuxième système (3) de ces valeurs envoyées par le premier système (2),
- (iii) traitement par le deuxième système (3) des valeurs reçues et élaboration de valeurs résultantes,
**caractérisé en ce que** ladite période de communication (T) comprend également les étapes suivantes :
- (iv) acheminement par la liaison (4) au premier système (2) de ces valeurs résultantes envoyées par le deuxième système (3), et
- (v) traitement par le premier système (2) de ces valeurs résultantes et application de ces valeurs résultantes dans le dispositif.

2. Procédé selon la revendication 1, dans lequel les valeurs résultantes sont déterminées de manière à réguler la ou lesdites grandeurs mécaniques ou électriques et sont appliquées lors de l'étape (v) au dispositif dans ce but.

3. Procédé selon la revendication 1 ou 2, dans lequel l'étape (iii) de traitement par le deuxième système (3) des valeurs reçues et d'élaboration de valeurs résultantes a une durée inférieure ou égale à la durée correspondant à la différence entre la période de communication (T) et l'amplitude (tₐ) de l'intervalle temporel d'acheminement du signal d'horloge (100).

4. Procédé selon l'une quelconque des revendications 1 à 3, dans lequel :
- lors de l'étape (ii), les valeurs envoyées par le premier système (2) sont acheminées sous la forme de données primaires (105), et
- lors de l'étape (iv), les valeurs résultantes envoyées par le deuxième système (3) sont acheminées sous la forme de données primaires (108)
et dans lequel chaque message (101) envoyé par le premier système (2) comprend d'abord des données secondaires (106) puis les données primaires (105), et chaque message (102) envoyé par le deuxième système (3) comprend d'abord les données primaires (108) puis des données secondaires (109),
la liaison (4) n'acheminant pas simultanément les données primaires (105) envoyées par le premier système (2) au deuxième système (3) et les données primaires (108) envoyées par le deuxième système (3) au premier système (2).

5. Procédé selon l'une quelconque des revendications 1 à 4, dans lequel le dispositif comporte des interrupteurs électroniques, et dans lequel les valeurs résultantes sont des valeurs de rapport cyclique pour ces interrupteurs.

6. Procédé selon la revendication 5, dans lequel le dispositif est un circuit électrique comprenant un convertisseur statique et un enroulement électrique d'un moteur électrique.

7. Procédé selon la revendication 6, dans lequel la période de communication (T) comprend les étapes suivantes :
- (i) mesure de valeurs de courant dans l'enroulement électrique du moteur électrique (6),
- (ii) acheminement par la liaison (4) au deuxième système (3) de ces valeurs sous la forme des données primaires (105) envoyées par le premier système (2),
- (iii) traitement par le deuxième système (3) des valeurs reçues et élaboration de valeurs de rapport cyclique pour les interrupteurs électroniques du convertisseur statique,
- (iv) acheminement par la liaison (4) au premier système (2) de ces valeurs de rapport cyclique sous la forme des données primaires (108) envoyées par le deuxième système (3), et
- (v) traitement par le premier système (2) de ces valeurs reçues et application de ces valeurs aux interrupteurs électroniques du convertisseur statique.

8. Procédé selon la revendication précédente, dans lequel l'enroulement électrique est statorique et polyphasé, et dans lequel lors de l'étape (i) on mesure des valeurs de courant dans au moins une phase de cet enroulement statorique.

9. Procédé selon la revendication 8, dans lequel le convertisseur statique est un onduleur.

10. Procédé selon l'une quelconque des revendications 5 à 9, dans lequel le deuxième système interagit avec un générateur de valeurs de rapport cyclique.

11. Procédé selon l'une quelconque des revendications 1 à 10, dans lequel la liaison (4) est une liaison de type Serial Peripheral Interface (SPI).

12. Procédé selon l'une quelconque des revendications précédentes, dans lequel le premier système (2) est maître de la communication.

13. Procédé selon l'une quelconque des revendications 1 à 12, dans lequel une isolation (20) est interposée entre le premier système (2) et le deuxième système (3) et cette isolation (20) est traversée par la liaison (4).

14. Procédé selon l'une quelconque des revendications 1 à 13, dans lequel l'un du premier système (2) et du deuxième système (3) comprend au moins un circuit logique programmable et l'autre du premier système (2) et du deuxième système (3) comprend au moins un microcontrôleur ou au moins un microprocesseur.

## Patentansprüche

1. Periodisches Kommunikationsverfahren zwischen mindestens einem ersten System (2) und mindestens einem zweiten System (3) mittels einer synchronen seriellen Vollduplex-Verknüpfung (4), wobei bei dem Verfahren während eines Kommunikationszeitraums (T) zwischen dem ersten System (2) und dem zweiten System (3) Daten ausgetauscht werden, umfassend:
- mindestens eine Nachricht (101) des ersten Systems (2) an das zweite System (3),
- mindestens eine Nachricht (102) des zweiten Systems (3) an das erste System (2) und ein Taktsignal (100),
wobei das Taktsignal (100) durch die Verknüpfung (4) während eines Zeitintervalls befördert wird, dessen Amplitude (tₐ) kleiner als der Kommunikationszeitraum (T) ist, wobei die Nachricht (101) des ersten Systems (2) an das zweite System (3) und die Nachricht (102) des zweiten Systems (3) an das erste System (2) alle beide durch die Verknüpfung (4) während des Zeitintervalls befördert werden, und ein Kommunikationszeitraum (T) die folgenden Schritte umfasst:
- (i) Messen von Werten mindestens einer elektrischen oder mechanischen Größe innerhalb einer Vorrichtung, die mit dem ersten System (2) interagiert,
- (ii) Befördern durch die Verknüpfung (4) an das zweite System (3) dieser von dem ersten System (2) geschickten Werte,
- (iii) Verarbeiten durch das zweite System (3) der empfangenen Werte und Erarbeiten von resultierenden Werten,
**dadurch gekennzeichnet, dass** der Kommunikationszeitraum (T) ebenfalls die folgenden Schritte umfasst:
- (iv) Befördern durch die Verknüpfung (4) an das erste System (2) dieser von dem zweiten System (3) geschickten resultierenden Werte, und
- (v) Verarbeiten durch das erste System (2) dieser resultierenden Werte und Anwenden dieser resultierenden Werte in der Vorrichtung.

2. Verfahren nach Anspruch 1, wobei die resultierenden Werte derart bestimmt sind, dass die mechanische(n) oder elektrische(n) Größe(n) eingestellt wird/werden und bei Schritt (v) mit diesem Ziel auf die Vorrichtung angewendet wird/werden.

3. Verfahren nach Anspruch 1 oder 2, wobei der Schritt (iii) der Verarbeitung durch das zweite System (3) der empfangenen Werte und der Erarbeitung von resultierenden Werten eine Dauer hat, die kleiner oder gleich der Dauer ist, welche der Differenz zwischen dem Kommunikationszeitraum (T) und der Amplitude (tₐ) des Zeitintervalls der Beförderung des Taktsignals (100) entspricht.

4. Verfahren nach einem der Ansprüche 1 bis 3, wobei:
- bei Schritt (ii) die von dem ersten System (2) geschickten Werte in Form von Primärdaten (105) befördert werden, und
- bei Schritt (iv) die von dem zweiten System (3) geschickten resultierenden Werte in Form von Primärdaten (108) befördert werden,
und wobei jede von dem ersten System (2) geschickte Nachricht (101) zunächst Sekundärdaten (106), dann die Primärdaten (105) umfasst, und jede von dem zweiten System (3) geschickte Nachricht (102) zunächst die Primärdaten (108), dann Sekundärdaten (109) umfasst,
wobei die Verknüpfung (4) die von dem ersten System (2) an das zweite System (3) geschickten Primärdaten (105) und die von dem zweiten System (3) an das erste System (2) geschickten Primärdaten (108) nicht gleichzeitig befördert.

5. Verfahren nach einem der Ansprüche 1 bis 4, wobei die Vorrichtung elektronische Schalter aufweist, und wobei die resultierenden Werte zyklische Verhältniswerte für diese Schalter sind.

6. Verfahren nach Anspruch 5, wobei die Vorrichtung ein elektrischer Schaltkreis ist, umfassend einen statischen Wandler und eine elektrische Wicklung eines Elektromotors.

7. Verfahren nach Anspruch 6, wobei der Kommunikationszeitraum (T) die folgenden Schritte umfasst:
- (i) Messen von Stromwerten in der elektrischen Wicklung des Elektromotors (6),
- (ii) Befördern durch die Verknüpfung (4) an das zweite System (3) dieser Werte in Form der von dem ersten System (2) geschickten Primärdaten (105),
- (iii) Verarbeiten durch das zweite System (3) der empfangenen Werte und Erarbeiten von zyklischen Verhältniswerten für die elektronischen Schalter des statischen Wandlers,
- (iv) Befördern durch die Verknüpfung (4) an das erste System (2) dieser zyklischen Verhältniswerte in Form der von dem zweiten System (3) geschickten Primärdaten (108), und
- (v) Verarbeiten durch das erste System (2) dieser empfangenen Werte und Anwenden dieser Werte auf die elektronischen Schalter des statischen Wandlers.

8. Verfahren nach vorangehendem Anspruch, wobei die elektrische Wicklung statorisch und mehrphasig ist und wobei bei Schritt (i) Stromwerte in mindestens einer Phase dieser Statorwicklung gemessen werden.

9. Verfahren nach Anspruch 8, wobei der statische Wandler ein Wechselrichter ist.

10. Verfahren nach einem der Ansprüche 5 bis 9, wobei das zweite System mit einem Generator zyklischer Verhältniswerte interagiert.

11. Verfahren nach einem der Ansprüche 1 bis 10, wobei die Verknüpfung (4) eine Verknüpfung vom Typ Serial Peripheral Interface (SPI) ist.

12. Verfahren nach einem der vorangehenden Ansprüche, wobei das erste System (2) der Kommunikationsmaster ist.

13. Verfahren nach einem der Ansprüche 1 bis 12, wobei eine Isolation (20) zwischen dem ersten System (2) und dem zweiten System (3) zwischengestellt ist und diese Isolation (20) von der Verknüpfung (4) durchquert wird.

14. Verfahren nach einem der Ansprüche 1 bis 13, wobei eins von dem ersten System (2) und dem zweiten System (3) mindestens einen programmierbaren logischen Schaltkreis umfasst und das andere von dem ersten System (2) und dem zweiten System (3) mindestens einen Mikrocontroller oder mindestens einen Mikroprozessor umfasst.

## Claims

1. Periodic communication method between at least one first system (2) and at least one second system (3) by way of a full duplex synchronous series connection (4), method wherein, during a communication period (T), data are exchanged between the first system (2) and the second system (3), said data comprising:
- at least one message (101) from the first system (2) to the second system (3),
- at least one message (102) from the second system (3) to the first system (2) and a clock signal (100),
the clock signal (100) being routed by the connection (4) during a time interval of which the amplitude (tₐ) is less than the communication period (T), the message (101) from the first system (2) to the second system (3) and the message (102) from the second system (3) to the first system (2) both being routed by the connection (4) during said time interval, and a communication period (T) comprising the following steps:
- (i) measuring values of at least one electrical or mechanical signal within a device interacting with the first system (2),
- (ii) routing by the connection (4) to the second system (3) of these values sent by the first system (2),
- (iii) processing by the second system (3) of the values received and developing resulting values,
**characterised in that** said communication period (T) also comprises the following steps:
- (iv) routing by the connection (4) to the first system (2) of these resulting values sent by the second system (3), and
- (v) processing by the first system (2) of these resulting values and applying these resulting values in the device.

2. Method according to claim 1, wherein the resulting values are determined so as to adjust the or said mechanical or electrical signals and are applied during step (v) to the device with this aim.

3. Method according to claim 1 or 2, wherein the step (iii) of processing by the second system (3) of the values received and the developing of resulting values has a duration, less than or equal to the duration corresponding to the difference between the communication period (T) and the amplitude (tₐ) of the time interval for routing the clock signal (100).

4. Method according to any one of claims 1 to 3, wherein:
- during step (ii), the values sent by the first system (2) are routed in the form of primary data (105), and
- during step (iv), the resulting values sent by the second system (3) are routed in the form of primary data (108)
and wherein each message (101) sent by the first system (2) firstly comprises secondary data (106) then primary data (105), and each message (102) sent by the second system (3) firstly comprises primary data (108) then secondary data (109),
the connection (4) not simultaneously routing the primary data (105) sent by the first system (2) to the second system (3) and the primary data (108) sent by the second system (3) to the first system (2).

5. Method according to any one of claims 1 to 4, wherein the device comprises electronic switches, and wherein the resulting values are duty cycle values for these switches.

6. Method according to claim 5, wherein the device is an electrical circuit comprising a static converter and an electrical winding of an electric motor.

7. Method according to claim 6, wherein the communication period (T) comprises the following steps:
- (i) measuring current values in the electrical winding of the electric motor (6),
- (ii) routing by the connection (4) to the second system (3) of these values in the form of primary data (105) sent by the first system (2),
- (iii) processing by the second system (3) of the resulting values and developing duty cycle values for the electronic switches of the static converter,
- (iv) routing by the connection (4) to the first system (2) of these duty cycle values in the form of primary data (108) sent by the second system (3), and
- (v) processing by the first system (2) of these resulting values and applying these values to the electronic switches of the static converter.

8. Method according to the preceding claim, wherein the electrical winding is stator-related and polyphase, and wherein during step (i), the current values are measured in at least one phase of this stator winding.

9. Method according to claim 8, wherein the static converter is an inverter.

10. Method according to any of claims 5 to 9, wherein the second system interacts with a duty cycle value generator.

11. Method according to any one of claims 1 to 10, wherein the connection (4) is a Serial Peripheral Interface (SPI) type connection.

12. Method according to any one of the preceding claims, wherein the first system (2) controls the communication.

13. Method according to any one of claims 1 to 12, wherein an isolation (20) is inserted between the first system (2) and the second system (3) and this isolation (20) is passed through by the connection (4).

14. Method according to any one of claims 1 to 13, wherein one of the first system (2) and the second system (3) comprises at least one programmable logic circuit and the other of the first system (2) and of the second system (3) comprises at least one microcontroller or at least one microprocessor.
